(19) **Europäisches Patentamt / European Patent Office / Office européen des brevets**

(11) **EP 2 075 227 A1**

(12) **EUROPEAN PATENT APPLICATION**
published in accordance with Art. 153(4) EPC

(43) Date of publication:
   **01.07.2009 Bulletin 2009/27**

(51) Int Cl.:
   ***C01B 3/40*** (2006.01)   ***B01J 23/89*** (2006.01)
   ***H01M 8/06*** (2006.01)

(21) Application number: **07829590.4**

(22) Date of filing: **11.10.2007**

(86) International application number:
   **PCT/JP2007/069852**

(87) International publication number:
   **WO 2008/047676 (24.04.2008 Gazette 2008/17)**

(84) Designated Contracting States:
   **AT BE BG CH CY CZ DE DK EE ES FI FR GB GR
   HU IE IS IT LI LT LU LV MC MT NL PL PT RO SE
   SI SK TR**

(30) Priority: **12.10.2006 JP 2006278638**

(71) Applicant: **Idemitsu Kosan Co., Ltd.**
   **Chiyoda-ku**
   **Tokyo 100-8321 (JP)**

(72) Inventors:
   • **OSAWA, Mitsuru**
     **Sodegaura-shi**
     **Chiba 299-0293 (JP)**
   • **FUKUNAGA, Tetsuya**
     **Sodegaura-shi**
     **Chiba 299-0293 (JP)**

(74) Representative: **HOFFMANN EITLE**
   **Patent- und Rechtsanwälte**
   **Arabellastraße 4**
   **81925 München (DE)**

(54) **METHOD FOR PRODUCING HYDROGEN-CONTAINING GAS**

(57)   Provided is a method for producing a hydrogen-containing gas, especially hydrogen for a fuel cell, by reforming a $C_5$ or more hydrocarbon or oxygen-containing hydrocarbon that is liquid at ordinary temperature and pressure.

   This is a method for producing a hydrogen-containing gas, which comprises reforming a hydrocarbon or an oxygen-containing hydrocarbon having at least 5 carbon atoms and liquid at ordinary temperature and pressure, with a catalyst that contains Ni, Mg and Al and contains at least one noble metal element selected from Pt, Pd, Ir, Rh and Ru.

## Description

### Technical Field

The present invention relates to a method for producing a hydrogen-containing gas. More precisely, the present invention relates to a method for producing a hydrogen-containing gas from a hydrocarbon or an oxygen-containing hydrocarbon having at least 5 carbon atoms (hereinafter, this may be abbreviated as "$C_5$ or more") and liquid at ordinary temperature and pressure, using a specific catalyst; especially to a method for producing a hydrogen-containing gas for a fuel cell.

### Background Art

Recently, new energy technology has become highlighted owing to environmental problems, and as one of the new energy technology, a fuel cell has been specifically noted. The fuel cell converts chemical energy to electric energy through electrochemical reaction of hydrogen with oxygen, attaining high energy utilization efficiency. Therefore, extensive studies have been carried out on realization of a fuel cell for civil use, industrial use, automobile use, etc.
As categorized in accordance with the type of the electrolyte used therein, a fuel cell is known to include phosphorus acid-type, molten carbonate-type, solid oxide-type and solid polymer-type ones and others. On the other hand, as hydrogen sources, studies have been conducted on using liquefied natural gas predominantly containing methanol and methane; city gas predominantly containing the natural gas; synthetic liquid fuels produced from the natural gas; further petroleum-derived LPG; and petroleum-derived hydrocarbons such as naphtha and kerosene.
For producing hydrogen from these petroleum-derived hydrocarbons, in general, the hydrocarbons are processed for steam reforming, autothermal reforming, partial oxidation reforming or the like in the presence of a catalyst.
As a reforming catalyst for such hydrocarbons, heretofore known is a ruthenium-based catalyst or a nickel-based catalyst; and it is also known that the catalyst prepared via hydrotalcite (a hydrate of a porous composite hydroxide) has high activity.
Regarding the hydrocarbon-reforming catalyst prepared via hydrotalcite, for example, disclosed are (1) a metal particles-supported hydrocarbon-reforming catalyst prepared from hydrotalcite as a precursor by substituting a part of its constitutive elements (Mg, Al) with a noble metal (Rh or Ru) or a transition metal element as an active metal, and baking it to thereby make the active metal species bleed out on the surface from the inside and to make the particles highly dispersed (e.g., see Patent Document 1); (2) a reforming catalyst containing magnesium, aluminum and nickel, as prepared via hydrotalcite (e.g., see Patent Documents 2 and 3); (3) a reforming catalyst prepared by introducing Ru into the interlayer space in hydrotalcite through ion exchanging, then baking it and activating it by reduction (e.g., see Patent Document 4); (4) an autothermal reforming catalyst containing magnesium, aluminum, nickel and iron, as prepared via hydrotalcite with suppressing ammonia by-production (e.g., see patent Document 5) ; (5) a methane-containing gas-reforming catalyst containing at least one metal selected from Ru, Pt, Pd, Rh and Ir, as prepared by baking a hydrotalcite-like layered compound (e.g., see Patent Document 6); (6) a hydrocarbon-cracking catalyst having magnesium, aluminum, nickel and ruthenium as the constitutive elements, as prepared via hydrotalcite (e.g., see Patent Document 7); and (7) a method for producing hydrogen from a lower hydrocarbon as a starting material, using a catalyst that has magnesium, aluminum and nickel as the constitutive elements and contains at least one elements selected from an alkali metal (excluding Na), an alkaline earth metal (excluding Mg), Zn, Co, Ce, Cr, Fe and La, and contains a noble metal element such as platinum, rhodium, ruthenium, iridium, palladium or the like, as prepared via hydrotalcite (e.g., see Patent Document 8).
Further disclosed are (8) steam reforming reaction of propane with a supported catalyst (Co-Ni-Rh/Mg-Al and Ni-Rh/Mg-Al) prepared by the use of hydrotalcite as a precursor, in Non-Patent Document 1; and (9) steam reforming reaction of a sunflower oil with a catalyst prepared from an Mg-free Ni-Al hydrotalcite-like substance as a starting substance, in Non-Patent Document 2.
However, for the reforming catalyst (1), there are given a description relating to substituting the constitutive elements of the precursor hydrotalcite with a noble metal, and a description relating to using a hydrocarbon, but there is given no description relating to a $C_5$ or more, liquid hydrocarbon or oxygen-containing hydrocarbon for the purpose of reforming of methane or methanol. For the reforming catalyst (2), there is given no description relating to a noble metal element to be in the catalyst, and in addition, there is given no description relating to using a $C_5$ or more, liquid hydrocarbon or oxygen-containing hydrocarbon. For the autothermal reforming catalyst (3), there is given a description relating to a reforming catalyst prepared by introducing Ru into the interlayer space in hydrotalcite through ion exchanging, then baking it and activating it by reduction; however, the raw material to be processed is a gaseous hydrocarbon mainly containing methane, ethane or the like, and there is given no description relating to an example of processing a $C_5$ or more, a liquid hydrocarbon or an oxygen-containing hydrocarbon.
The reforming catalyst (4) contains metal nickel particles and/or metal iron particles along with magnesium and aluminum, in which one or more elements selected from gold, silver, platinum, palladium, rhodium, iridium, rhenium, copper, manganese, chromium, vanadium and titanium are said to be supported as noble metal elements; however, the starting material to be processed is mainly a gaseous lower hydrocarbon containing methane to butane, and there is given no description relating to an example of processing a $C_5$ or more, a liquid hydrocarbon or an oxygen-containing hydrocarbon. In (5), a methane-containing gas is reformed with a catalyst produced by making Ru, Pt, Pd, Rh, Ir or the like supported by a various type of a hydrotalcite-like layered compound prepared by changing the ratio of $Mg^{2+}$ and $Al^{3+}$, and then baking it; however, there is given no description relating to use of a $C_5$ or more, liquid hydrocarbon or oxygen-containing hydrocarbon. Also in (6) and (7), there is given no description relating to Examples with a $C_5$ or more, a liquid hydrocarbon or an oxygen-containing hydrocarbon. Regarding (8), they say that the propane conversion with the catalyst is higher than that with a Rh-free Ni/Mg-Al, but they say that the coke deposition amount increases; in addition, there is given no description relating to processing a $C_5$ or more, a liquid hydrocarbon or an oxygen-containing hydrocarbon. In (9), there is given no description relating to use of a noble metal element, and in addition, there is also given no description relating to use of a $C_5$ or more, a liquid hydrocarbon or an oxygen-containing hydrocarbon except sunflower oil.

Further, it could not be said that the conventional hydrocarbon reforming catalysts are not always satisfactory in point of activity thereof.

[Patent Document 1] JP 11-276893-A
[Patent Document 2] JP 2003-135967-A
[Patent Document 3] JP 2004-255245-A
[Patent Document 4] JP 2003-290657-A
[Patent Document 5] JP 2005-224722-A
[Patent Document 6] JP 2005-288259-A
[Patent Document 7] JP 2006-061759-A
[Patent Document 8] JP 2006-061760-A
[Non-Patent Document 1] Shishido et al's "Preprint A in 96th Catalyst Discussion (September 20 to 23, 2005, 3E-18, p. 183)"
[Non-Patent Document 2] Maximiliano Marquevich et al., "Cat. Lett., Vol. 85, Nos. 1-2, pp. 41-48 (2003)"

**Disclosure of the Invention**

**Problems to be solved by the Invention**

Given that situation, an object of the present invention is to provide a method for efficiently producing a hydrogen-containing gas, especially a hydrogen-containing gas for a fuel cell using a catalyst having improved durability.

**Means for solving the Problems**

The present inventors have assiduously studied for attaining the above-mentioned object, and as a result, have found that, in producing a hydrogen-containing gas, especially a hydrogen-containing gas for a fuel cell by reforming a hydrocarbon, the obj ect can be attained by combining a catalyst that contains specific metal elements, especially a specific catalyst obtained via a hydrotalcite-like layered compound, and a $C_5$ or more, a liquid hydrocarbon or an oxygen-containing hydrocarbon. The present invention has been completed on the basis of these findings.

Specifically, the present invention provides the following (1) to (9):

(1) A method for producing a hydrogen-containing gas, which comprises reforming a liquid hydrocarbon or an oxygen-containing hydrocarbon having at least 5 carbon atoms and liquid at ordinary temperature and pressure, with a catalyst that contains Ni, Mg and Al and contains at least one noble metal elements selected from Pt, Pd, Ir, Rh and Ru;

(2) The method for producing a hydrogen-containing gas of the above (1), wherein the catalyst is used after a repeated reduction-oxidation treatment;

(3) The method for producing a hydrogen-containing gas of the above (1) or (2), wherein the catalyst is obtained via a hydrotalcite-like layered compound;

(4) The method for producing a hydrogen-containing gas of any one of the above (1) to (3), wherein the catalyst is obtained by baking a hydrotalcite-like layered compound and making it carry a noble metal ingredient;

(5) The method for producing a hydrogen-containing gas of any one of the above (1) to (3), wherein the noble metal element is Rh and/or Ru;

(6) The method for producing a hydrogen-containing gas of any one of the above (1) to (3), wherein the hydrocarbon reforming is steam reforming, autothermal reforming or partial oxidation reforming;

(7) The method for producing a hydrogen-containing gas of any one of the above (1) to (3), wherein the hydrocarbon is a linear or branched saturated hydrocarbon, an alicyclic saturated hydrocarbon, a monocyclic or polycyclic aromatic hydrocarbon, or mixture thereof;

(8) The method for producing a hydrogen-containing gas of any one of the above (1) to (3), wherein the hydrocarbon is at least one selected from a light naphtha, a heavy naphtha, a naphtha, a gasoline, a kerosene, a light oil, an A-heavy oil, a biodiesel fuel, or a vegetable oil; and

(9) The method for producing a hydrogen-containing gas of any one of the above (1) to (3), wherein the hydrogen-containing gas is a hydrogen-containing gas for a.

## Effect by the Invention

According to the present invention, a hydrogen-containing gas, especially a hydrogen-containing gas for a fuel cell is efficiently produced by combining a hydrocarbon-reforming catalyst containing specific metal elements, especially the catalyst obtained via a hydrotalcite-like layered compound, and a $C_5$ or more, liquid hydrocarbon or oxygen-containing hydrocarbon.

## Best Mode for carrying out the Invention

The catalyst for use in the present invention is a catalyst for reforming a hydrocarbon to produce a hydrogen-containing gas, which contains Ni, Mg and Al and contains at least one noble metal element selected from Pt, Pd, Ir, Rh and Ru (hereinafter, this may be referred to as a "hydrocarbon-reforming catalyst"); and the hydrocarbon to be reformed is a $C_5$ or more hydrocarbon or oxygen-containing hydrocarbon liquid at ordinary temperature and pressure. Especially preferably, the hydrocarbon reforming catalyst is obtained via a hydrotalcite-like layered compound, from the viewpoint of the catalytic activity and the durability thereof.

Hydrotalcite is naturally a clay mineral represented by the following formula (1):

$$Mg_6Al_2(OH)_{16}CO_3 \cdot 4H_2O \qquad (1)$$

Recently, a substance containing a divalent metal cation [M(II)$^{2+}$], a trivalent metal cation [M(III)$^{3+}$] and an n-valent interlayer anion (A$^{n-}$) and represented by the following formula (2) has become referred to as a hydrotalcite-like substance, a hydrotalcite-like compound, a hydrotalcite structure, or simply hydrotalcite.

$$[(M(II)^{2+})_{1-X}(M(III)^{3+-})_X(OH^-)_2]^{X+}(A^{n-}{}_{x/n}) \cdot mH_2O \qquad (2)$$

Hydrotalcite represented by formula (1) has a structure in which "OH$^-$(0.75Mg$^{2+}$, 0.25Al$^{3+}$)OH$^-$" forms a flat skeleton as a vulcite layer, and negatively-charged 0.125CO$_3{}^{2-}$ and 0.5H$_2$O are sandwiched between the layers. The ratio of Mg$^{2+}$ to Al$^{3+}$ in the vulcite layer may be varied in a broad range, and the positive charge density inside the vulcite layer can be thereby controlled.

The content of the noble metal ingredient in the above catalyst is preferably from 0.05 to 3% by mass as the metal element, more preferably from 0.1 to 2.0% by mass, even more preferably from 0.2 to 1.0% by mass, from the viewpoint of the balance between the resistance to oxidation, the catalytic activity and the economical aspect. The noble metal element is preferably Rh and/or Ru from the viewpoint of the catalytic activity.

The content of the Ni ingredient is preferably from 5 to 25% by mass as the metal element, more preferably from 8 to 20% by mass, even more preferably from 10 to 20% by mass, from the viewpoint of the balance between the catalytic activity and the economical aspect.

Regarding the content of the Mg element and the Al element, the Mg element is preferably from 0.5 to 0.85, more preferably from 0.6 to 0.8, based on the total by mol of the Mg element and the Al element. When the amount of the Mg element in terms of the molar ratio is at least 0.5, then the porous carrier may exhibit its characteristics; and when it is at most 0.85, then the catalyst may have sufficient strength.

The element sources to constitute the above catalyst include the following compounds.

A ruthenium compound as the noble metal (Ru) source includes, for example, ruthenium salts such as RuCl$_3 \cdot$H$_2$O, Ru(NO$_3$)$_3$, Ru$_2$(OH)$_2$Cl$_4 \cdot$7NH$_3 \cdot$3H$_2$O, K$_2$(RuCl$_5$(H$_2$O)), (NH$_4$)$_2$(RuCl$_5$(H$_2$O)), K(RuCl$_5$(NO)), RuBr$_3 \cdot$nH$_2$O, Na$_2$RuO$_4$, Ru(NO)(NO$_3$)$_3$, (Ru$_3$O(OAc)$_6$(H$_2$O)$_3$)OAc$\cdot$nH$_2$O, K$_4$(Ru(CN)$_6$)$\cdot$nH$_2$O, K$_2$(Ru(NO$_2$)$_4$(OH)(NO)), (Ru(NH$_3$)$_6$)Cl$_3$, (Ru(NH$_3$)$_6$)Br$_3$, (Ru(NH$_3$)$_6$)Cl$_2$, (Ru(NH$_3$)$_6$)Br$_2$, (Ru$_3$O$_2$(NH$_3$)$_{14}$)Cl$_6 \cdot$H$_2$O, (Ru(NO)(NH$_3$)$_5$)Cl$_3$, (Ru(OH)(NO)(NH$_3$)$_4$)(NO$_3$)$_2$, RuCl$_2$(PPh$_3$)$_3$, RuCl$_2$(PPh$_3$)$_4$, RuClH(PPh$_3$)$_3 \cdot$C$_7$H$_8$, RuH$_2$(PPh$_3$)$_4$, RuClH(CO)(PPh$_3$)$_3$, RuH$_2$(CO)(PPh$_3$)$_3$, (RuCl$_2$(cod))$_n$, Ru(CO)$_{12}$, Ru(acac)$_3$, (Ru(HCOO)(CO)$_2$)$_n$, Ru$_2$I$_4$(p-cymene)$_2$, [Ru(NO) (edta)]$^-$, etc.

One or more of these ingredients may be used either singly or as combined.

From the viewpoint of easy handlability, preferred are RuCl$_3 \cdot$nH$_2$O, Ru(NO$_3$)$_3$, and Ru$_2$(OH)$_2$Cl$_4 \cdot$7NH$_3 \cdot$3H$_2$O.

A rhodium compound as the noble metal element (Rh) source includes, for example, $Na_3RhCl_6$, $(NH_4)_2RhCl_6$, $Rh(NH_3)_5Cl_3$, $Rh(NO_3)_3$, $RhCl_3$, etc.

A platinum compound as the noble metal element (Pt) source includes, for example, $PtCl_4$, $H_2PtCl_6$, $Pt(NN_3)_4Cl_2$, $(MH_4)_2PtCl_2$, $H_2PtBr_6$, $NH_4[Pt(C_2H_4)Cl_3]$, $Pt(NH_3)_4(OH)_2$, $Pt(NH_3)_2(NO_2)_2$, etc.

A palladium compound as the noble metal element (Pd) source includes, for example, $(NH_4)_2PdCl_6$, $(NH_4)_2PdCl_4$, $Pd(NH_3)_4Cl_2$, $PdCl_2$, $Pd(NO_3)_2$, etc.

An iridium compound as the noble metal element (Ir) source includes, for example, $(NH_4)_2IrCl_6$, $IrCl_3$, $H_2IrCl_6$, etc.

A nickel compound as the Ni element source includes, for example, $Ni(NO_3)_2 \cdot 6H_2O$, $NiO$, $Ni(OH)_2$, $NiSO_4 \cdot 6H_2O$, $NiCO_3$, $NiCO_3 \cdot 2Ni(OH)_2 \cdot nH_2O$, $NiCl_2 \cdot 6H_2O$, $(HCOO)_2Ni \cdot 2H_2O$, $(CH_3COO)_2Ni \cdot 4H_2O$, etc.

A magnesium compound as the Mg element source includes, for example, $Mg(NO_3)_2 \cdot 6H_2O$, $MgO$, $Mg(OH)_2$, $MgC_2H_4 \cdot 2H_2O$, $MgSO_4 \cdot 7H_2O$, $MgSO_4 \cdot 6H_2O$, $MgCl_2 \cdot 6H_2O$, $Mg_3(C_6H_5O_7)_2 \cdot nH_2O$, $3MgCO_3.Mg(OH)_2$, $Mg(C_6H_5COO)_2 \cdot 4H_2O$, etc.

An aluminum compound as the Al element source includes, for example, $Al(NO_3)_3 \cdot 9H_2O$, $Al_2O_3$, $Al(OH)_3$, $AlCl_3 \cdot 6H_2O$, $AlO(COOCH_3) \cdot nH_2O$, $Al_2(C_2O_4)_3 \cdot nH_2O$, etc.

The above catalyst is preferably one obtained by baking a hydrotalcite-like layered compound and then processing it to carry a noble metal ingredient.

The catalyst can be prepared, for example, according to the following method.

An Ni source such as nickel nitrate, an Mg source such as magnesium nitrate and an Al source such as aluminum nitrate are dissolved in water, and the resulting aqueous solution and an aqueous sodium hydroxide solution are at the same time gradually and dropwise added to an aqueous sodium carbonate solution, whereupon the pH of the system is kept constant all the time during the addition. The pH is preferably from 9 to 13 or so. Subsequently, the formed precipitate is ripened at 40 to 100°C or so for 30 minutes to 80 hours or so, preferably for 1 to 24 hours or so, and thereafter taken out through filtration, and further dried at 80 to 150°C or so.

Subsequently, the thus-obtained hydrotalcite-like layered compound is baked at a temperature of from 400 to 500°C or so, thereby giving an NiMgAl composite oxide. Subsequently, an aqueous solution containing an Ru source of a noble metal compound such as $Ru(NO_3)_3$ is infiltrated into the composite oxide, whereby the oxide is made to carry a predetermined amount of the noble metal element. In this stage, in case where the noble metal element exists in an anion complex, the noble metal element may also be supported by the carrier through ion exchange. In the case of ion exchange, when an NiMgAl composite oxide is put into the aqueous solution, then it may be restored to a Hydrotalcite structure owing to the memory effect and an anion site may be formed between the layers. After the carrier has thus carried the noble metal element, it is further baked at a temperature of from 400 to 1500°C or so.

The noble metal element may also be incorporated into the carrier as follows: For example, along with a nickel source, a magnesium source and an aluminum source, a noble metal compound to be the noble metal source may be dissolved in an aqueous solution, and it may be used for the noble metal element introduction.

The specific surface area of the catalyst thus prepared via a hydrotalcite-like layered compound in the manner as above may be generally from 5 to 250 $m^2/g$, preferably from 7 to 200 $m^2/g$. When the specific surface area is less than 5 $m^2/g$, then the disc diameter and the thickness of each particle are both large, and the catalyst may be difficult to shape. When the specific surface area is more than 250 $m^2/g$, the individual particles are too much fine, and they are problematic in the washing step and in the filtration step.

One characteristic feature of the present invention is that the reforming catalyst thus prepared in the manner as above is combined with a $C_5$ or more hydrocarbon or oxygen-containing hydrocarbon that is liquid at ordinary temperature and pressure.

The $C_5$ or more hydrocarbon that is liquid at ordinary temperature and pressure includes linear or branched saturated aliphatic hydrocarbons such as pentane, hexane, heptane, octane, nonane and decane; alicyclic saturated hydrocarbons such as cyclohexane, methylcyclohexane and cyclooctane; monocyclic or polycyclic aromatic hydrocarbons; etc. Their commercial products include light naphtha, heavy naphtha, naphtha, gasoline, kerosene, light oil, an A-heavy oil, etc. The oxygen-containing hydrocarbon includes biodiesel fuel, vegetable oil and the like to be produced from bioresources.

In general, in case where the $C_5$ or more hydrocarbon or oxygen-containing hydrocarbon that is liquid at ordinary temperature and pressure contains a sulfur ingredient, it is preferably desulfurized in a desulfurizing step so that it may have a reduced sulfur content of generally at most 0.1 ppm by mass. When the sulfur content in the starting hydrocarbon is more than 0.1 ppm by mass or so, then it may cause deactivation of the reforming catalyst. The desulfurization method is not specifically defined, for which, for example, suitably employable is desulfurization by hydrogenation, desulfurization by adsorption or the like.

Subsequently described is reforming reaction of a $C_5$ or more hydrocarbon or oxygen-containing hydrocarbon that is liquid at ordinary temperature and pressure.

[Steam Reforming]

As the reaction condition, the hydrocarbon amount and the steam amount may be so controlled that the ratio of steam/carbon (molar ratio) could be generally from 1.5 to 10, preferably from 1.5 to 5, more preferably from 2 to 4. By controlling the steam/carbon ratio (molar ratio) in that manner, a product gas having a larger hydrogen content can be efficiently produced.

The reaction temperature may be generally from 200 to 900°C, preferably from 250 to 900°C, even more preferably from 300 to 800°C. The reaction pressure may be generally from 0 to 3 MPa·G, preferably from 0 to 1 MPa·G.

During the steam reforming reaction, the inlet port temperature of the reforming catalyst layer may be kept at 630°C or lower, preferably 600°C or lower. When the inlet port temperature is higher than 630°C, thermal decomposition of the hydrocarbon may be promoted, whereby carbon may precipitate on the catalyst and on the wall of tubular reactor via the formed radical, and driving the system may be thereby difficult.

The outlet port temperature of the catalyst layer is not specifically defined. It is preferably within a range of from 650 to 800°C. When the outlet port temperature is not lower than 650°C, then the amount of hydrogen formation may be sufficient; and when it is not higher than 800°C, then the reaction apparatus does not require any specific heat-resistant material and is therefore economical.

The steam for use in the steam reforming reaction is not specifically defined.

[Autothermal Reforming Reaction]

Autothermal reforming reaction means oxidation of hydrocarbon and reaction with steam of hydrocarbon occurring in one and the same tubular reactor or in a continuous tubular reactor system; and the reaction temperature is generally from 200 to 1, 300°C, preferably from 400 to 1,200°C, more preferably from 500 to 900°C.

The steam/carbon ratio (molar ratio) may be generally from 0.1 to 10, preferably from 0.4 to 4. The oxygen/carbon ratio (molar ratio) may be generally from 0.1 to 1, preferably from 0.2 to 0.8.

The reaction pressure may be generally from 0 to 10 MPa·G, preferably from 0 to 5 MPa·G, more preferably from 0 to 3 MPa·G.

[Partial Oxidation Reforming Reaction]

Partial oxidation reforming reaction is partial oxidation of hydrocarbon generally at a reaction temperature of from 350 to 1,200°C, preferably from 450 to 900°C. The oxygen/carbon ratio (molar ratio) may be generally from 0.4 to 0.8, preferably from 0.45 to 0.65.

The reaction pressure may be generally from 0 to 30 MPa·G, preferably from 0 to 5 MPa·G, more preferably from 0 to 3 MPa·G.

Prior to the start of the above reaction, the catalyst may be pre-treated for activation, for example, by repeated reduction-oxidation treatment. Repeated reduction-oxidation treatment may activate the catalyst and may enhance the durability of the catalyst.

In the repeated reduction-oxidation treatment, the reduction step is generally in a hydrogen gas-containing atmosphere at 600 to 1100°C or so, preferably at 700 to 1000°C or so. When the temperature is not lower than 600°C, then the Ni ingredient may be sufficiently reduced, and the thus-treated catalyst may have an increased activity. When the temperature is not higher than 1100°C, then the activity of the noble metal ingredients such as the Ni ingredient and the Ru ingredient may be prevented from being lowered owing to sintering.

The reduction treatment time may depend on the treatment temperature. From the viewpoint of the balance between the sufficient reduction of the Ni ingredient and the economic aspect, the time is preferably from 30 minutes to 10 hours or so, more preferably from 1 to 5 hours.

On the other hand, in the repeated reduction-oxidation treatment, the oxidation step is generally in an oxygen gas-containing atmosphere at 400 to 1200°C or so, preferably at 500 to 1000°C or so. As the oxygen-containing gas, generally employed is air; however, a gas prepared by diluting air with an inert gas such as nitrogen or argon, or a water vapor may also be used.

When the oxidation treatment temperature is not lower than 400°C, then the noble metal elements such as Ni and Ru may be sufficiently oxidized and the catalyst may favorably attain the effect of the present invention; and when the temperature is not higher than 1200°C, then the noble metal ingredient such as Ru may hardly vaporize and the surface area thereof may hardly reduce.

The oxidation treatment time may depend on the treatment time. From the viewpoint of the balance of the sufficient oxidation of the noble metal elements such as Ni and Ru and the economical aspect, the time is preferably from 30 minutes to 10 hours or so, more preferably from 1 to 5 hours or so.

In the present invention, from the viewpoint of enhancing the catalytic activity, it is desirable that the baked catalyst is, after processed for reduction, further repeatedly processed for "oxidation-reduction" once to 20 times, more preferably once to 10 times, even more preferably once to three times.

As such pretreatment for oxidation, the hydrocarbon reforming catalyst is processed for repeated reduction-oxidation, whereby the activity of the hydrocarbon reforming catalyst and the durability thereof are enhanced; and the reason may be considered as follows.

It may be considered that the interaction with the active metal elements of noble metal elements such as Ni, Ru and Rh could be enhanced more owing to the repeated reduction/oxidation treatment by which the active metal elements could be highly dispersed, whereby the activity of the catalyst may be enhanced and the durability thereof may also be enhanced. However, when the reduction/oxidation is repeated more than predetermined frequency, then the active metal elements may aggregate and the activity of the catalyst may be thereby reduced.

The reforming reaction system may be any of a continuous flow system or a batchwise system; however, preferred is a continuous flow system.

When a continuous flow system is employed, the liquid hourly space velocity (LHSV) of hydrocarbon may be generally from 0.1 to 10 $h^{-1}$, preferably from 0.25 to 5 $h^{-1}$.

The reaction mode is not specifically defined. Any of a fixed bed system, a mobile bed system or fluidized bed system may be employed; but a fixed bed system is preferred.

The reactor shape is not also specifically defined. For example, a tubular reactor or the like may be used.

Using the reforming catalyst under the condition mentioned in the above, hydrocarbon may be processed for steam reforming reaction, autothermal reforming reaction or partial oxidation reaction to give a hydrogen-containing mixture.

In particular, the hydrogen-containing mixture can be favorably used as a hydrogen-containing gas in a hydrogen production process for a fuel cell.

Examples

The present invention is described in more detail with reference to the following Examples, by which, however, the present invention should not be limited.

[Comparative Preparation Example 1]

$Ni(NO_3)_2 \cdot 6H_2O$ (16.414 g), $Mg(NO_3)_2 \cdot 6H_2O$ (70.813 g) and $Al(NO_3)_3 \cdot 9H_2O$ (41.492 g) were dissolved in water (150 ml) to prepare a "solution"; and $Na_2CO_3 \cdot 10H_2O$ (15.816 g) was dissolved in water (100 ml) to prepare a "solution B". Subsequently, the "solution A" was dropwise added to the "solution B". In this step, an aqueous NaOH solution having a concentration of 1 mol/liter was suitably dropwise added to the system so that the pH of the liquid could be 10. After the addition of the "solution A", this was stirred at 90°C for 40 minutes, and then kept static at 90°C for 20 hours, then left cooled, and filtered under suction to collect a precipitate.

Subsequently, the precipitate was washed with 2 liters of water, then dried at 105°C for 9 hours, heated up to 850°C at a speed of 0.83°C/min; and at that temperature, this was baked for 5 hours thereby giving a catalyst X-1 (spc-Ni/Mg-Al). The Ni content of the catalyst X-1 was 14% by mass, the Mg content thereof was 28% by mass, and the Al content thereof was 13% by mass.

The "spc" is an abbreviation of "solid phase crystallization".

[Preparation Example 1]

An aqueous solution of $Ru(NO_3)_3$ (0.5 ml) having a concentration of 50 g/liter was diluted with water (200 ml) to prepare a "solution C". The catalyst X-1 obtained in Comparative Preparation Example 1 (5.0 g) was put into the "solution C", stirred at room temperature for 12 hours, and then heated up to 90°C with stirring to thereby dry the precipitate to solidness.

Subsequently, the dried substance was heated up to 850°C at a speed of 0.83°C/min, and then baked at that temperature for 5 hours to give a catalyst Y-1 (spc-Ru-Ni/Mg-Al).

The Ru content of the catalyst Y-1 was 0.5% by mass.

[Comparative Preparation Example 2]

(1) Preparation of Carrier:

$Mn (CH_3COO)_2 \cdot 4H_2O$ (5. 45 g) was dissolved in water (11.5ml) to prepare an "solution A for inpregnating". Subsequently, the "solution A for impregnating" was infiltrated into a γ-alumina carrier (30 g) that had been previously fully dried, according to a pore-filling method, and then this was dried at 120°C for 3 hours, and baked at 800°C for 3 hours to give a Mn-carried carrier.

(2) Preparation of Catalyst:

$RuCl_3$ (0.39 g) was dissolved in water (1.8 ml) to prepare an "solution B for impregnating". The "solution B for inpregnating" was infiltrated into the Mn-carried carrier (5.0 g) of the above (1) that had been previously fully dried, according to a pore-filling method, and then this was subjected to alkali decomposition with an aqueous NaOH solution (100 ml) having a concentration of 5 mol/liter, for 1 hour. Subsequently, this was washed with water, taking 24 hours, and then dried at 120°C for 5 hours to give a catalyst X-2 ($Ru/Mn/Al_2O_3$).

The Ru content of the catalyst X-2 was 3.0% by mass, and the Mn content thereof was 3.7% by mass.

[Example 1 and Comparative Examples 1 and 2]

The catalyst Y-1 obtained in Preparation Example 1, and the catalysts X-1 and X-2 obtained in Comparative Preparation Examples 1 and 2 were used. These were processed for initial reduction, and then used for steam reforming and autothermal reforming.

<Initial Reduction>

Each catalyst prepared in the manner as above was shaped into a size of from 16 to 32 meshes. 200 g of the thus-shaped catalyst was filled in a tubular reactor, and processed for initial reduction therein in a hydrogen stream atmosphere at 850°C for 1 hour.

<Steam Reforming>

200 mg of the catalyst was filled in tubular reactor as a catalyst layer therein, and processed for initial reduction at 850°C for 1 hour in a hydrogen stream atmosphere. Subsequently, the reaction temperature was kept at around 500°C, and a desulfurized kerosene (S: less than 0.02 ppm by mass) and water were fed into the catalyst layer in such a manner that the liquid hourly space velocity (LHSV) of the desulfurized kerosene could be 16.5 $h^{-1}$ and the steam/carbon ratio (molar ratio) could be 3.0, thereby starting steam reforming of the desulfurized kerosene. One hour, 7 hours, 13 hours, 19 hours and 25 hours after the start of the reaction, the gas was sampled and analyzed for C1 conversion with time of the desulfurized kerosene. During the reaction, the temperature in the system was so controlled that the mean temperature of the catalyst layer could be kept at 500°C. The results are shown in Table 1.

<Autothermal Reforming>

200 mg of the catalyst was filled in tubular reactor as a catalyst layer therein, and processed for initial reduction at 850°C for 1 hour in a hydrogen stream atmosphere. Subsequently, the reaction temperature was kept at around 700°C, and a desulfurized kerosene (S: less than 0.02 ppm by mass), water and air were fed into the catalyst layer in such a manner that steam/carbon ratio (molar ratio) could be 1.8 and the oxygen/carbon ratio (molar ratio) could be 0.45, thereby starting autothermal reforming of the desulfurized kerosene. One hour, 7 hours, 13 hours, 19 hours and 25 hours after the start of the reaction, the gas was sampled and analyzed for C1 conversion with time of the desulfurized kerosene. During the reaction, the temperature in the system was so controlled that the mean temperature of the catalyst layer could be kept at 700°C. The results are shown in Table 1.

The C1 conversion of the desulfurized kerosene is obtained according to the following formula:

$$C1 \ conversion \ (\%) = (A/B) \times 100$$

[wherein A = CO flow rate by mol + $CO_2$ flow rate by mol + $CH_4$ flow rate by mol (the flow rate was all at the outlet port of the tubular reactor); B = carbon flow rate by mol of the desulfurized kerosene on the side of the inlet port of the tubular reactor].

[Table 1]

| Reforming Mode | Catalyst Type Parenthesized | Cl Conversion (unit: %) Change with Time | | | | |
|---|---|---|---|---|---|---|
| | | 1 hr | 7 hrs | 13 hrs | 19 hrs | 25 hrs |
| Steam Reforming | Example 1 (spc-Ru-Ni/Mg-Al) | 93 | 78.4 | 73.7 | 73.4 | 72.5 |
| | Comparative Example 1 (spc-Ni/Mg-Al) | 89.3 | 68.4 | 54.2 | 42.3 | 40.7 |
| | Comparative Example 2 (Ru/Mn/Al$_2$O$_3$) | 60.1 | 40.7 | 38.1 | - | - |
| Autothermal Reforming | Example 1 (spc-Ru-Ni/Mg-Al) | 99.9 | 99.9 | 98.9 | 98.8 | 98.8 |
| | Comparative Example 1 (spc-Ni/Mg-Al) | 98.8 | 99.5 | 66.7 | 54.4 | 46.0 |
| | Comparative Example 2 (Ru/Mn/Al$_2$O$_3$) | 90.6 | 78.5 | 71.7 | 69.2 | 67.4 |

As in Table 1, the C1 conversion depression with time in Example is smaller than in Comparative Examples. From this, it is understood that the catalyst of the present invention exhibits an extremely excellent effect when used in processing a $C_5$ or more hydrocarbon or oxygen-containing hydrocarbon that is liquid at ordinary temperature and pressure such as kerosene.

**Industrial Applicability**

The production method of the present invention is applicable to production of hydrogen-containing gas from hydrocarbon, especially to production of hydrogen for a fuel cell.

**Claims**

1.  A method for producing a hydrogen-containing gas, which comprises reforming a liquid hydrocarbon or an oxygen-containing hydrocarbon having at least 5 carbon atoms and liquid state at ordinary temperature and pressure, with a catalyst that contains Ni, Mg and Al and contains at least one noble metal elements selected from Pt, Pd, Ir, Rh and Ru.

2.  The method for producing a hydrogen-containing gas as claimed in claim 1, wherein the catalyst is used after a repeated reduction-oxidation treatment.

3.  The method for producing a hydrogen-containing gas as claimed in claim 1 or 2, wherein the catalyst is obtained via a hydrotalcite-like layered compound.

4.  The method for producing a hydrogen-containing gas as claimed in any one of claims 1 to 3, wherein the catalyst is obtained by baking a hydrotalcite-like layered compound and making it carry a noble metal ingredient.

5.  The method for producing a hydrogen-containing gas as claimed in any one of claims 1 to 3, wherein the noble metal element is Rh and/or Ru.

6.  The method for producing a hydrogen-containing gas as claimed in any one of claims 1 to 3, wherein the hydrocarbon reforming is steam reforming, autothermal reforming or partial oxidation reforming.

7.  The method for producing a hydrogen-containing gas as claimed in any one of claims 1 to 3, wherein the hydrocarbon is a linear or branched saturated hydrocarbon, an alicyclic saturated hydrocarbon, a monocyclic or polycyclic aromatic hydrocarbon, or mixture thereof.

8.  The method for producing a hydrogen-containing gas as claimed in any one of claims 1 to 3, wherein the hydrocarbon is at least one selected from a light naphtha, a heavy naphtha, a naphtha, a gasoline, a kerosene, a light oil, an A-heavy oil, a biodiesel fuel, or a vegetable oil.

9.  The method for producing a hydrogen-containing gas as claimed in any one of claims 1 to 3, wherein the hydrogen-containing gas is a hydrogen-containing gas for a fuel cell.

## INTERNATIONAL SEARCH REPORT

| International application No. |
| --- |
| PCT/JP2007/069852 |

A. CLASSIFICATION OF SUBJECT MATTER
*C01B3/40(2006.01)i, B01J23/89(2006.01)i, H01M8/06(2006.01)n*

According to International Patent Classification (IPC) or to both national classification and IPC

B. FIELDS SEARCHED

Minimum documentation searched (classification system followed by classification symbols)
C01B3/32-3/48, B01J23/89, H01M8/06

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CA(STN), JSTPlus(JDream2)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2005-224722 A  (Toda Kogyo Corp.),<br>25 August, 2005 (25.08.05),<br>Claims 6, 8; Par. Nos. [0005] to [0007], [0080];<br>example 13<br>(Family: none) | 1,3-7,9<br>2,8 |
| X<br>Y | JP 2006-61759 A  (Toda Kogyo Corp.),<br>09 March, 2006 (09.03.06),<br>Claims; Par. Nos. [0075], [0076]; examples<br>1 to 10<br>(Family: none) | 1,3,5-7,9<br>2,8 |
| X<br>Y | JP 2004-66170 A  (Nissan Motor Co., Ltd.),<br>04 March, 2004 (04.03.04),<br>Par. Nos. [0001], [0040]; example 3<br>(Family: none) | 1,5-9<br>2 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 December, 2007 (25.12.07) | Date of mailing of the international search report<br>15 January, 2008 (15.01.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2007/069852 |

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y | JP 2004-57869 A  (Nissan Motor Co., Ltd.),<br>26 February, 2004 (26.02.04),<br>Par. Nos. [0001], [0045]; example 3<br>(Family: none) | 1,5-9<br>2 |
| X<br>Y | JP 2005-169236 A  (Nissan Motor Co., Ltd.),<br>30 June, 2005 (30.06.05),<br>Par. Nos. [0030], [0036]; catalyst preparation<br>examples 1, 6, 9; table 1, catalysts A, F, I<br>(Family: none) | 1,5-9<br>2 |
| X<br>Y | JP 2006-181399 A  (Nikki-Universal Co., Ltd.),<br>13 July, 2006 (13.07.06),<br>Claims 2, 7; Par. Nos. [0002], [0017], [0029]<br>(Family: none) | 1,5-9<br>2 |
| Y | JP 2003-290657 A  (National Institute of<br>Advanced Industrial Science and Technology),<br>14 October, 2003 (14.10.03),<br>Claim 1; Par. Nos. [0006], [0017]<br>(Family: none) | 8 |
| Y | JP 2002-509028 A  (BASF AG.),<br>26 March, 2002 (26.03.02),<br>Claims 1, 6; Par. Nos. [0012] to [0013]<br>& US 6355589 B1      & EP 1047629 A1<br>& WO 1999/036350 A1    & DE 19801373 A | 2 |
| Y | JP 2001-212460 A  (Mitsubishi Heavy Industries,<br>Ltd.),<br>07 August, 2001 (07.08.01),<br>Claim 3; example 1<br>(Family: none) | 2 |
| Y | JP 46-25366 B1  (The Gas Council),<br>22 July, 1971 (22.07.71),<br>Claims; column 4, lines 11 to 14; column 5,<br>lines 29 to 30; example 1<br>& GB 1196411 A        & US 3630967 A<br>& BE 700311 A | 2 |
| A | Maximiliano MARQUCVICH, et al., Steam reforming<br>of sunflower oil over Ni/Al catalysts preparerd<br>from hydrotalcite-like materials, Catalysis<br>Letters, 2003, vol.85, no.1-2, p.41-48 | 1-9 |
| A | Tetsuya SHISHIDO et al., "Hydrotalcite o<br>Zenkutai to shite Chosei shita Tanji Ni Shokubai<br>ni yoru Propane Suijoki Kaishitsu Hanno", Dai<br>96 Kai CatSJ Meeting Toronkai A Yokoshu, 2005,<br>page 183 | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11276893 A
- JP 2003135967 A
- JP 2004255245 A
- JP 2003290657 A
- JP 2005224722 A
- JP 2005288259 A
- JP 2006061759 A
- JP 2006061760 A

**Non-patent literature cited in the description**

- **Shishido et al.** *Preprint A in 96th Catalyst Discussion,* 20 September 2005, vol. 3E-18, 183
- **Maximiliano Marquevich et al.** *Cat. Lett,* 2003, vol. 85 (1-2), 41-48